# EUROPEAN PATENT SPECIFICATION

(11) **EP 1 649 423 B1**
(45) Date of publication and mention of the grant of the patent: **13.08.2008**
(21) Application number: 04745012.7
(22) Date of filing: 22.07.2004
(51) Int. Cl.: G06T 7/00

(54) **METHOD AND SYTEM FOR THE THREE-DIMENSIONAL SURFACE RECONSTRUCTION OF AN OBJECT**
VERFAHREN UND SYSTEM ZUR DREIDIMENSIONALEN OBERFLÄCHENREKONSTRUKTION EINES OBJEKTS
PROCEDE ET SYSTEME DE RECONSTRUCTION DE SURFACE TRIDIMENSIONNELLE D'UN OBJET

(30) Priority: 24.07.2003 US 490586 P
(43) Date of publication of application: 26.04.2006
(73) Proprietor: Cognitens Ltd., Ramat Hasharon 47282 (IL)
(72) Inventor: ALBECK, Dan, 54034 Giv'at Shmuel (IL); SEGEV, Avner, 43241 Raanana (IL); SHALOM, Tamir, 69395 Tel Aviv (IL)
(74) Representative: Minoja, Fabrizio
(86) International application number: PCT/IL2004/000672
(87) International publication number: WO 2005/010825

(56) References cited:
- WO-A-99/28704
- US-A1- 2003 174 880
- US-B1- 6 229 913
- SANSONI G ET AL: "A NOVEL, ADAPTIVE SYSTEM FOR 3-D OPTICAL PROFILOMETRY USING A LIQUID CRYSTAL LIGHT PROJECTOR" IEEE TRANSACTIONS ON INSTRUMENTATION AND MEASUREMENT, IEEE INC. NEW YORK, US, vol. 43, no. 4, 1 August 1994 (1994-08-01), pages 558-565, XP000466818 ISSN: 0018-9456
- BATLLE J ET AL: "Recent progress in coded structured light as a technique to solve the correspondence problem - image segmentation techniques" PATTERN RECOGNITION, ELSEVIER, KIDLINGTON, GB, vol. 31, no. 7, 31 July 1998 (1998-07-31), pages 963-982, XP004131001 ISSN: 0031-3203
- SALVI J ET AL: "Pattern codification strategies in structured light systems" PATTERN RECOGNITION, ELSEVIER, KIDLINGTON, GB, vol. 37, no. 4, April 2004 (2004-04), pages 827-849, XP004491495 ISSN: 0031-3203 cited in the application
- FOFI D ET AL: "Uncalibrated reconstruction: an adaptation to structured light vision" PATTERN RECOGNITION, ELSEVIER, KIDLINGTON, GB, vol. 36, no. 7, July 2003 (2003-07), pages 1631-1644, XP004417154 ISSN: 0031-3203

## Description

### FIELD OF THE INVENTION

This invention relates to a system and method for the three-dimensional surface reconstruction of an object, in particular at least partially based on structured illumination techniques. The invention also relates to the labeling of elements between two images of an object or scene.

### BACKGROUND OF THE INVENTION

The determination of a three-dimensional (3D) shape of an object is of important significance in many fields. For example, in the field of dimensional measurement of manufactured objects, accurate measurement of a number of predetermined dimensions and/or the surface coordinates of such objects can provide an important tool for determining the accuracy of the manufacturing process.

Systems and methods for such 3D shape determination, particularly for industrial applications, have followed two main paths: mechanical and optical. Mechanical systems, while providing accurate 3D data for an objects, rely on mechanical contact between a probe and the object, and only one surface point at a time is measured, which results in a very slow, and often impractical, data acquisition rate.

Optical systems may be based on any one of a number of different methodologies. In one category, a triangulation system is used for determining the 3D spatial location for points on the object on which projected beams of light are reflected. In another category, epipole techniques are used for the same purpose. In either case, scan-line systems project a single line of light on the object, and the reflection of the projected line is read by a camera that is at some angle with respect to the projector apparatus axis of projection. This provides a contour on the image from which the position of the object section (where the line was projected) can be triangulated. In such systems, the line of light is progressively scanned over the object, and in this manner the full 3D shape of the object is determined. However, this method also suffers from a long acquisition time, which can also introduce errors if there is any unknown movement between the camera and the object during this time.

Improved scan-line systems can project a plurality of scan lines simultaneously onto an object, and the reflections of all the lines are captured by a camera. While acquisition time is fast, it is difficult to provide matching between the lines in the image taken by the camera and the illumination grid, because there is an ambiguity as to which line in the illumination grid a particular reflected line corresponds to. This is particularly problematic when the object is itself complex and comprises sharp edges or steep surfaces, as is often the case for manufactured items.

Various methods are known for solving the ambiguity problem. "Pattern Codification Strategies in Structured Light Systems", by J. Salvi et al (published April 2004) provides a general overview of such methods. In one time multiplexing strategy described therein, a temporal codification method, known as the Gray Code Method employs various spatial frequencies of binary patterns to illuminate an object. Typically, first two stripes are used, light and dark, to completely illuminate the area of interest on the object, and the reflection therefrom is recorded on an image. Then, the object is again illuminated, but with 4 stripes, two light and two dark. The process is repeated several times, each time doubling the number of stripes, illuminating the same area of the object, and recording the reflections therefrom in a separate set of images. Any line on the object can be related to a particular original stripe from the unique observed code at that location from the gray scale that was previously used to illuminate the object.

However, such a method requires multiple data acquisition steps, and also suffers from relatively large data acquisition time to obtain the 3D structure of an object.

Spatial based methods are also known for solving the ambiguity problem, and some are also discussed in the aforesaid "Pattern Codification Strategies in Structured Light Systems" publication. Typically, a codeword that labels a certain point of a pattern is obtained from a neighborhood of points around it. Since the spatial neighborhood cannot always be recovered in the image, the decoding stage of the method can become problematic, and errors can arise. Further typically, the color or intensity of pixels, or groups of adjacent pixels are the visual features that may be gathered in the spatial neighborhood. In one spatial based method, a three-dimensional imaging system, marketed by the present Assignee under the name Optigo 200, illuminates a desired object, i.e., an object regarding which it is desired to determine its 3D structure, with a random grid of black and white pixels. Two or more cameras set at different angles with respect to the object each take a picture simultaneously of the object with the random grid superposed on it, and the grid pattern images captured by each camera are correlated one with the other. In such spatial based methods, a single spatial coding pattern is used for solving the ambiguity problem, and the methods then use the pixel correspondence between images thus found to find the coordinates of the surface of the object being investigated.

Of general background interest, US 6,510,244 relates to a method for imaging a 3D object, wherein a pattern of lines in the form of a grid is illuminated onto an object, and the shape thereof is acquired on the basis of relative distances between the lines and/or intersections of the lines of the pattern. Also of background interest, US 6,252,623 relates to an imaging method and apparatus, in which the object is illuminated with a repetitive pattern of differently-colored bands to enhance the accuracy of the image obtained by reducing cross-talk between the colored bars of the captured image.

### SUMMARY OF THE INVENTION

Herein, the term "correspondence" refers to point to point mapping between different images of an object, typically at the pixel level, for example based on neighborhood-type coding.

The term "labeling" is used herein to refer to the proper identification of patterns such as one-dimensional line patterns or quasi one dimensional stripe patterns between different images of an object.

The term "matching" refers to sub-pixel to sub-pixel mapping between different images of an object.

The term "image", in addition to the regular usage, is also used herein to include an original pattern that is projected onto an object.

In the present invention, a methodology is provided for reconstructing 3D surface structure of an object. The term "object" includes any two or three dimensional object or a collection of objects including a scene.

The method is based on enabling unique matching of each reflected point on an object with an illuminating pattern using a two stage approach, such matching being possible at the sub-pixel level. In the first stage, a first set of images is obtained, and a spatial coding technique is used for correspondence mapping of coordinates from a first image to a second image of an object. Neighborhood coding techniques are typically used for determining this correspondence. In one embodiment, a random grid or other structured light is used to illuminate the object, and the images are obtained at different angles with respect to the object. In other embodiments, surface features of the object may be sufficient to enable the aforesaid mapping to be effected from images obtained using unstructured light.

In the second stage, a second structured illumination, typically comprising a striped grid, is used to obtain a second set of images, typically comprising two further images of the object, and the mapping provided by the first stage provides proper labeling of the grid between these two images of the second set. Triangulation or epipole methods, or any other suitable method, can then be used for obtaining the 3D coordinates of the surface being reconstructed.

Thus, the present invention relates to a method for the three-dimensional surface reconstruction of an object comprising the steps of:
(a) obtaining a first set of images of the object having a first structured pattern on the surface thereof, and determining correspondence of image points between images of said first set of images;
(b) obtaining a second set of images of the object having a second structured pattern thereon, and labeling said second structured pattern between images of said second set of images based on the correspondence determined in (a);
(c) matching elements between images of said second set of images based on the labeling determined in (b); and
(d) determining spatial coordinates of the object from matched elements of said images of said second set of images in (b).

Typically, step (a) comprises the steps of:
- obtaining said first set of images of said object, wherein said first structured pattern is defined by means of a uniquely coded structured pattern of structured light used for illuminating the object; and
- finding correspondence between image points of images of said first set of images by mapping coordinates of one image on at least one other image based on coding related to the first structured pattern.

The first set of images typically comprises two images at different angles with respect to said object. In a first embodiment of the invention, the two images are captured as images, substantially simultaneously, either by using two cameras, or a single camera that is moved between two positions relative to the object. In a second embodiment, one image of said first set of images comprises said uniquely coded structured pattern and at least one other image of said first set of images is captured as an image, and thus only a single fixed camera is necessary.

Typically, the uniquely coded structured pattern comprises a two dimensional random or pseudo random gray code, i.e., a two dimensional array having a random or pseudo random distribution of black and white elements. A pattern matching technique may be used for finding correspondence of image points in step (a).

Typically, the second structured pattern comprises a periodic structured pattern illuminated on the object. The second set of images typically comprises two images at different angles with respect to said object. In a first embodiment of the invention, the two images are captured as images, either by using two cameras, typically simultaneously, or a single camera that is moved between two positions relative to the object. In a second embodiment, one image of said first set of images comprises said uniquely coded structured pattern and at least one other image of said first set of images is captured as an image, and thus only a single fixed camera is necessary.

Thus, the second embodiment generally requires pre-knowledge of the pattern that is projected onto the object, and this requires projector calibration in addition to camera calibration. In the first embodiment, only calibration of the cameras is required.

The relationship between the first set of images and the object is substantially similar to the relationship between the second set of images and the object, though small variations are generally acceptable.

The periodic pattern typically comprises a first plurality of stripes of a first intensity or color intercalated with respect to a second plurality of stripes of a second intensity or color. In one example, the first plurality of stripes comprise white pixels and said second plurality of stripes comprise black pixels.

In particular, the following steps may be implemented in the second stage of the method:-
a first element in a first image of said second set of images is associated according to a first association technique with a first image point of a first image of said first set of images;
a second image point of a second image of said first set of images having correspondence with said first image point is determined; and
said second image point is associated with at least one second element of a second image of said second set of images according to a second association technique, wherein said at least one second element matches said first element.

According to said first association technique, said first element is an image element in substantially the same spatial location as the said first image point relative to their respective images.

According to said second association technique, said at least one second element is an image element in a spatial location relative to its image that is at or in close proximity to the location of said second image point relative to its image.

The first element typically comprises the centre point of a row of pixels of a stripe of the first plurality of stripes comprised in the first image of the second set of images.

The second element typically comprises the centre point of a row of pixels of a stripe of the first plurality of stripes comprised in the second image of said second set of images.

Step (d) may be based on triangulation techniques, or on epipolar reconstruction techniques, or on any other suitable techniques.

The present invention also relates to a method for matching points between images of a first set of images of an object comprising the steps of:
(a) obtaining said first set of images of the object having a first structured pattern thereon;
(b) obtaining a second set of images of the object having a second structured pattern on the surface thereof, and determining correspondence of image points between images of said second set of images;
(c) labeling elements of said first structured pattern between images of said first set of images based on the correspondence determined in (b);
(d) matching points comprised in elements between elements labeled in (c).

The present invention also relates to a system for the three-dimensional surface reconstruction of an object comprising:-
(I) a projector adapted for selectively illuminating said object with a first structured pattern and a second structured pattern;
(II) at least one camera for obtaining images of said object when illuminated with said first structured pattern and a second structured pattern;
(III) microprocessor means for determining three-dimensional surface topology of said object based on said images

The microprocessor means, typically a computer, is adapted for determining said topology according to the method the invention.

The method of the invention can be incorporated in a computer readable medium for instructing a suitable computer to carry out the method.

The present invention also relates to a control unit for use in the three-dimensional surface reconstruction of an object, said control unit being preprogrammed to carry out
(i) processing data indicative of a first set of images of the object having a first structured pattern on the surface thereof, and determining correspondence of image points between images of said first set of images;
(ii) using said correspondence for processing a second set of images of the object having a second structured pattern thereon to map elements of said second structured pattern between images of said second set of images;
(iii) analyzing the matched elements to determine spatial coordinates of the object.

Thus, the present invention applies a correspondence method to provide correct line-to-line labeling, providing fast and correct labeling, and with only using two sets of images of the object, and this may provide fast and accurate 3D reconstruction of a surface. In particular, the first stage of the method provides an effective means of correspondence, in only a single data acquisition step, and this correspondence may then be used to perform the line-to-line labeling, allowing the 3D reconstruction to be performed with sub-pixel level of accuracy.

### BRIEF DESCRIPTION OF THE DRAWINGS

In order to understand the invention and to see how it may be carried out in practice, a preferred embodiment will now be described, by way of nonlimiting example only, with reference to the accompanying drawings, in which:
**Fig. 1** is a schematic illustration of the method according to an embodiment of the invention.
**Fig. 2** is a schematic illustration of the elements of a first embodiment of the system of the invention.
**Fig. 3** illustrates a random or quasi-random pixel pattern used with the embodiment of Fig. 2 or of Fig. 10.
**Fig. 4** illustrates images obtained with the system of Fig. 2 when the object is illuminated with the pattern of Fig. 3.
**Fig. 5** illustrates a line pattern used with the embodiment of Fig. 2 or of Fig. 10.
**Fig. 6** illustrates images obtained with the system of Fig. 2 when the object is illuminated with the pattern of Fig. 5.
**Fig. 7** illustrates a method for obtaining the coordinates of a point on an object using images obtained with the system of Fig. 2 when the object is illuminated with the pattern of Fig. 5.
**Fig. 8** illustrates a triangulation method for obtaining the coordinates of a point on an object using images obtained with the system of Fig. 2 when the object is illuminated with the pattern of Fig. 5.
**Fig. 9** illustrates an epipole based method for obtaining the coordinates of a point on an object using images obtained with the system of Fig. 2 when the object is illuminated with the pattern of Fig. 5.
**Fig. 10** is a schematic illustration of the elements of a second embodiment of the system of the invention.
**Fig. 11a** and **Fig. 11b** illustrate a random or quasi-random pixel pattern projected, and the image received, respectively, by the projector and camera of the embodiment of Fig. 10.
**Fig. 12a and Fig. 12b** illustrate the line pattern projected, and the image received, respectively, by the projector and camera of the embodiment of Fig. 10.

### DETAILED DESCRIPTION OF THE INVENTION

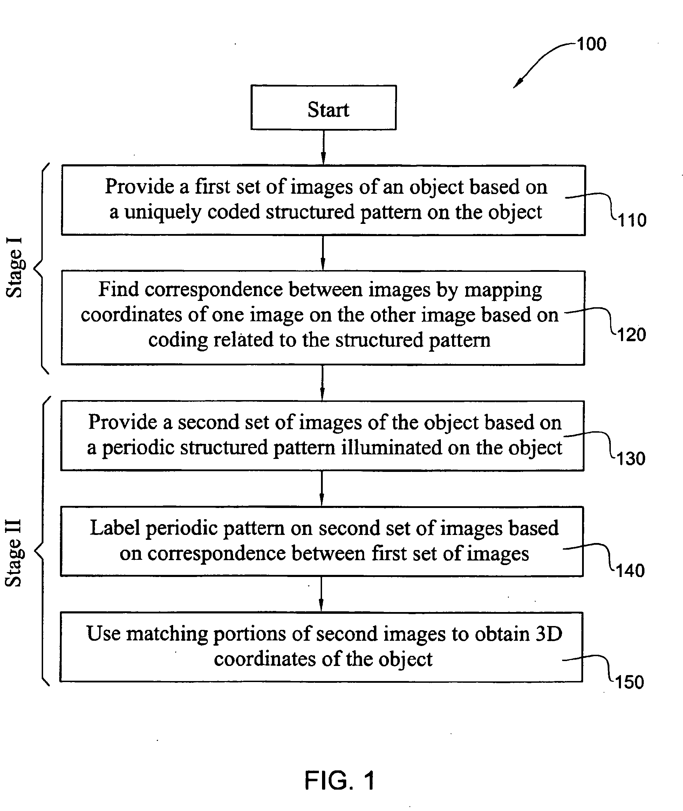

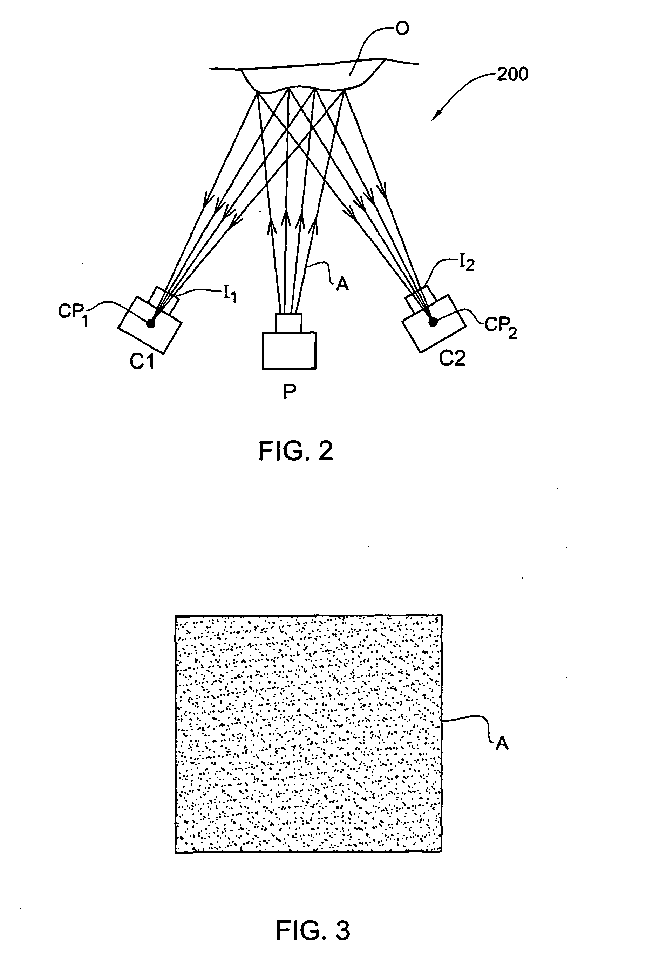

An embodiment of the method of the invention, generally designated with the reference numeral **100,** is illustrated in Fig. 1. In a first stage, Stage **I**, of the method, and also referring to Figs. 2, 3 and 4, an object **O** is illuminated with a structured illumination, such that a unique coding (light pattern) may be concentrated in a single illumination. As illustrated schematically in Fig. 3, such a structured illumination typically comprises spatial coding in the form of a random or quasi random pixel pattern, **A,** such that preferably each matrix of [*nxm*] pixels in the pattern is unique. In this embodiment, the pixel pattern **A** is essentially a two-dimensional gray scale, wherein the pixels are colored black or white. The distribution of black and white pixels may be random. Alternatively, the distribution may be "quasi-random", i.e., specifically designed so that for any matrix of [*n* by *m*] pixels within the grid (pattern), there is a unique permutation of white and black pixels not found anywhere else in the grid A. In practice, it is usually sufficient to provide local uniqueness, rather than global uniqueness, for grid A, so that parts of the pattern in the grid may actually be repeated within the grid, but at some distance from one another.

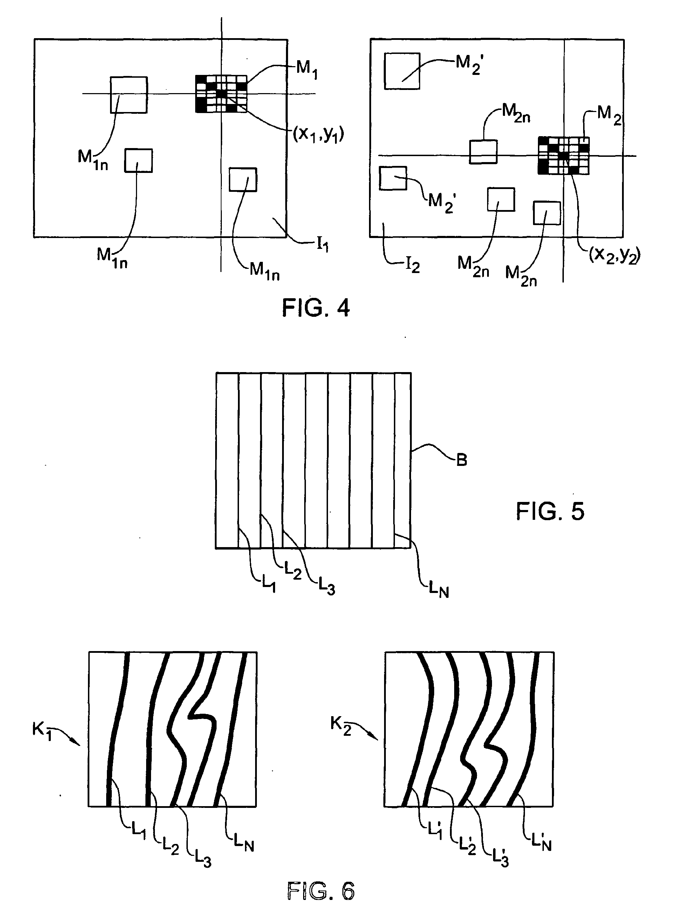

In step **110,** images of the object **O** are provided by simultaneously capturing two images of the object **O,** that is **I**₁ and **I**₂ respectively, with the pattern **A** superposed on the object, as illustrated schematically in Fig 4.

In step **120,** these images can then be processed to identify each part of the image **I₂** as corresponding to a part of image **I₁,** according to the unique distribution of white and black pixels, as described further herein. Any suitable decoding, pattern recognition or pattern matching methods may be used for this purpose. When viewed superposed on the object, the pattern **A** will appear distorted, according to the topography of the object **O,** and moreover the type and extent of this "distortion" will usually vary according to the viewing angle with respect to the object **O**. Each image **I₁, I₂,** will comprise a pattern, **A₁, A₂** respectively, which appear distorted relative to the original pattern **A,** and generally different one from the other, since as is known the projection of a 3D entity such as a curve, for example, in two 2D planes results in two different curves in these planes.

The first image **I₁** may be regarded as a coded image of the object **O,** and consists of a plurality of black and white pixels in a global rectangular matrix, and this matrix is divided into all possible local [nxm] matrices, which may thus sometimes overlap one with another to some extent, so that each pixel of the first image I₁ can be assigned an [nxm] matrix centered on it. Of course, pixels at the edges and corners of the image may only have a part of such a matrix associated therewith, and the following method can also be applied to such matrices, *mutatis mutandis.* For example, such [nxm] matrices are [5x5] matrices, though the size and aspect ratio of the matrices may vary depending on the size and other characteristics of the image **I1**.

An exemplary "decoding" procedure regarding the second image is executed as follows, and is based on neighborhood coding techniques. Taking for example matrix **M₁** in image **I₁,** such as a [5x5] matrix centered on a particular pixel having coordinates (x₁, y₁) in image **I₁,** a search is conducted in the other image, **I₂,** to find the location of a similar [5x5] matrix in which the black/white pixel pattern thereof correlates the best with the pixel pattern of matrix **M₁.** When this matrix, **M₂,** is found, the coordinates of the center thereof, (x₂, y₂) are noted. These center coordinates may refer to a pixel, or alternatively, suitable methods may be employed to provide a sub-pixel level of accuracy for these coordinates. This operation is repeated for every pixel (and thus for every possible [nxm] matrix of pixels) in image **I₁,** thereby effectively mapping the coordinates of the centers of pixels in image **I₁** to those of image **I₂.** In this manner, every part of the image **I₁** can be effectively mapped with respect to image **I₂.**

Where the grid A only comprises local uniqueness, and thus there is some repetition of the pattern within the grid, it is possible to nevertheless find the correspondence between the two images and thus map each matrix from image **I₁** to image **I₂.** This may be done, for example, by associating each matrix in **I₁,** say for example **M₁,** with a number of other matrices **M₁ₙ** that are situated in close proximity to, i.e., in the neighborhood of, **M₁.** If there are a number of matrices **M₂'** in the second image **I2** which correlate with **M₁,** then the particular one of matrices **M₂'** that has in its vicinity the matrices **M₂ₙ** that are correlated with the aforesaid matrices **M₁ₙ** is chosen as being the matrix corresponding to **M₁.**

Alternatively, rather than using a random grid based on a gray scale, it is possible to use a random grid based on a color scale instead, for example as described in the aforementioned "Pattern Codification Strategies in Structured Light Systems" reference, the contents of which are incorporated herein in their entirety.

In step **130** of stage II of the method, and referring to Fig. 5, a second structured pattern, is projected onto the object **O,** and a further two images, comprising images **K₁, K₂** are taken, as illustrated in Fig. 6. The second structured pattern is now a periodic pattern, typically a striped illumination pattern **B** formed of an array of spaced apart stripes, i.e., comprising substantially parallel stripes of white pixels separated by stripes of black pixels. Alternatively, the pattern **B** may be comprised of any desired combination of colors.

In step **140,** each part of each of the stripes or lines **L₁, L₂....Lₙ** in one image or image **K₁** can be identified and labeled as corresponding to a particular line number **L₁', L₂'....Lₙ'** in the other image or image **K₂,** for example, as follows.

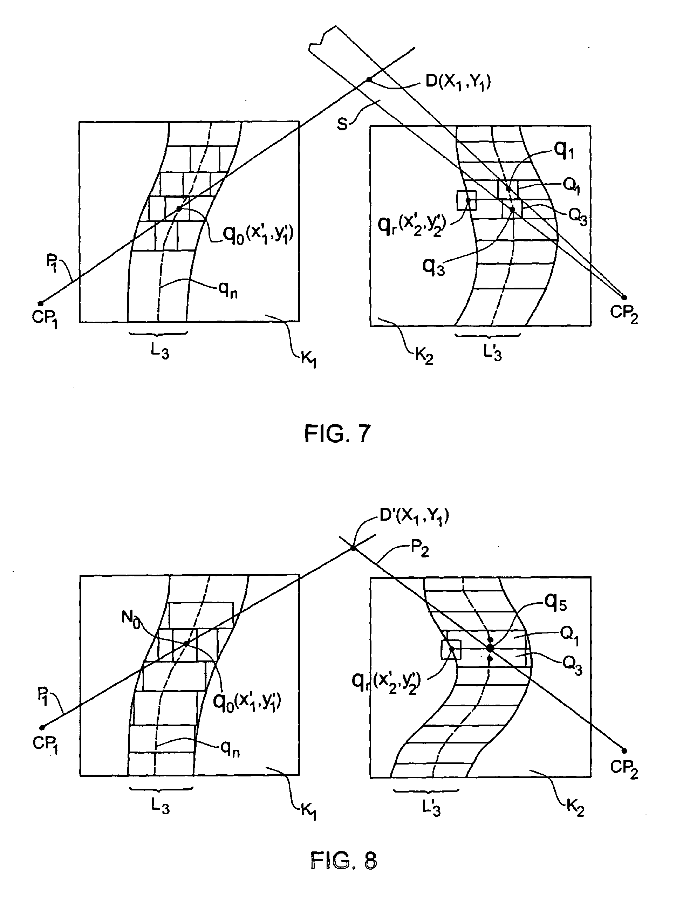

Referring to Fig. 7, and taking a line **L₃** in image **K₁,** for example, the centre points **q**ₙ thereof are found for each pixel or set of pixels along the length of line **L₃,** and there are several known methods for finding the center points accurately, for example the zero crossing method. For one such center point, **q**₀, corresponding to pixel **N₀,** the coordinates thereof are determined, say (x₁', y₁'). Then, these coordinates are mapped to image **K₂** according to the correspondence previously obtained with the structured illumination in Stage **I**, i.e., to location **q**ᵣ (x₂', y₂'). Then, in the labeling stage, image **K₂** is searched in the vicinity of (x₂', y₂') to find the line segment **Lᵢ'** of any one of lines **L₁', L₂'....Lₙ'** that is closest to (X₂', y₂'), in Fig. 7 identified as **L₃'.**

Next, elements between images **K₁** and **K₂** are matched. First, the pixels or set of pixels **Q₁, Q₃** along **L3'** having centers **q₁** and **q₃** closest to (x₂', y₂') are identified. The coordinates in **K₂** corresponding the closest to coordinates of **q**₀, (x₁', y₁'), of **K₁,** according to stage II, are considered to be somewhere between these centers **q₁, q₃.**

In step 150, the coordinates (X₁, Y₁) of the object **O** corresponding to (x₁', y₁') are then obtained as follows. A space ray **P₁** is defined by point **q₀** (x₁', y₁') and the center of projection **CP₁** of image **K₁.** Then, a plane S is defined by points **q₁, q₃** and the center of projection **CP₂** of image **K₂.** The intersection point **D** of ray **P₁** with plane **S** provides the coordinates (X₁, Y₁) object **O,** or a close estimation thereof.

Alternatively, and as illustrated in Fig. **8****,** coordinates (X₁, Y₁) of the object **O** corresponding to (x₁', y₁') are obtained as follows. A space ray **P₁** is defined by point (x₁', y₁') and the center of projection **CP₁** of image **K₁.** Next, image **K₂** is interpolated to provide the coordinates of the centre point **q**₅ of line **L₃'** having the same **y₂'** coordinate as the mapped point **qᵣ** (x₂', y₂'). The point **q**₅ is considered to be matched to point **q₀.** Then, a space ray **P₂** is defined by point **q5** and the center of projection **CP₂** of image **K₂.** Triangulation methods can then be used to find the intersection **D'** of rays **P**₁, **P₂,** or at least the point of minimum distance between **P₁** and **P₂,** and this provides the coordinates of point (X₁, Y₁), or a close estimation thereof.

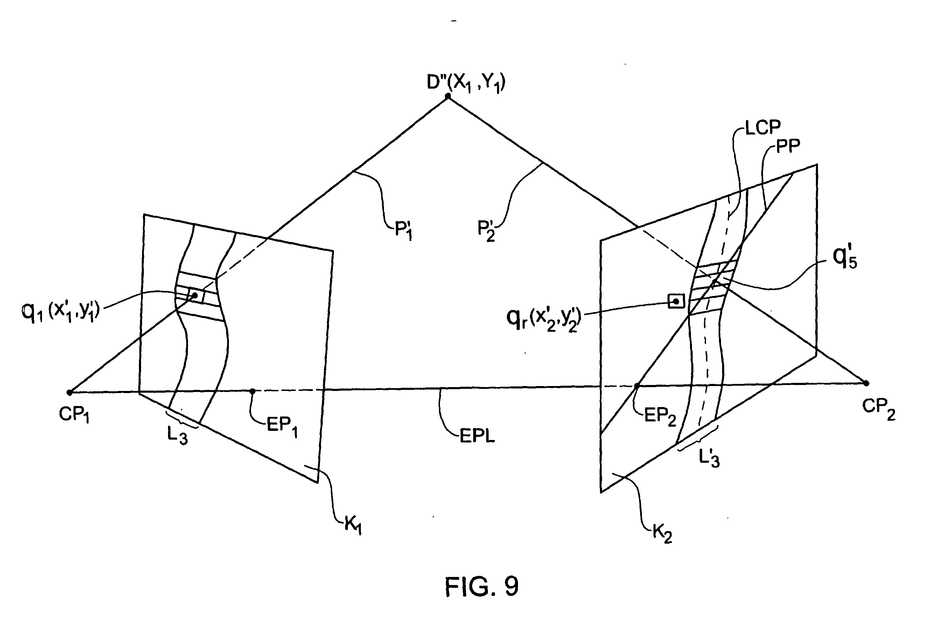

Alternatively, and as illustrated in Fig. 9, an epipole reconstruction-based method may be used for obtaining the coordinates of point **D"** (X₁, Y₁) of the object **O** corresponding to **q₀** (x₁', y₁'). First, the coordinates of **q₀** (x₁', y₁') are mapped to point **qᵣ** (x₂', y₂') on image **K₂** according to the correspondence previously obtained with the structured illumination in Stage **I.** Then, as before, image **K₂** is searched in the vicinity of (x₂', y₂') to find the line segment **L**ᵢ' of any one of lines **L₁', L₂'....Lₙ'** that is closest to (x₂', y₂'), i.e., **L**₃'. A space ray **P₁'** is defined by point **q₀** and the center of projection **CP₁** of image **K₁,** and thus passes through point **D".** An epipolar line **EPL** connects **CP**₁ with the center of projection **CP₂** of image **K₂,** and images **K₁** and **K₂** at epipoles **EP₁** and **EP₂,** respectively. The projection of point **D"** onto image **K₂** is constrained to lie on the epipolar line **PP**, which passes through **EP₂,** and the relationship between D" and **PP** is described by the corresponding Fundamental matrix, as is known in the art. Then, the locus of centre points LCP of **L₃',** found using any suitable method, such as for example the zero crossing method, is intersected by epipolar line **EE** to provide the coordinates of the centre point **q₅'** corresponding to **q₀.** The point **q₅'** is considered to be matched to point **q₀.** Epipolar methods can then be used to determine the coordinates of point **D,** (X₁, Y₁).

Optionally, the first stage of the method can be implemented without the need of a grid **A** if the object **O** comprises a suitable structured surface pattern, using unstructured light. In such a case, it is only necessary to obtain two images of the object and to map the coordinates of one image to the other image via suitable pattern matching techniques on the basis of local uniqueness of this surface pattern.

Referring to Fig. 2, the method of the invention according to this embodiment may be carried out using a system **200.** System **200** provides the required illumination for Stage I and Stage II using projector **P**, and at least two images are obtained with two cameras, **C₁** and **C₂,** at different angles with respect to the object **O.** Typically these images are taken substantially simultaneously. Alternatively, a single camera that is moved between at least two positions at different angles may be used to provide the two images. A microprocessor means (not shown) such as a suitable computer processes the images obtained by the cameras **C₁** and **C₂,** typically via an image grabber, according to the method of the invention.

There are many ways for illuminating the object. For example, a light emitter may be used having a mask, the mask selectively enabling either pattern A or pattern **B** to be illuminated onto the object. The mask can be a so-called "passive" mask, for example two masks defining fixed patterns **A** and **B,** respectively, selectively locatable in the optical path of light generated by the light emitter. Such a passive mask may be in the form of a rotating disc, one half of which comprises pattern A, and the other half pattern **B,** and the disc is rotated by 180° to bring the required half in alignment with the light emitter.

Alternatively, the mask may be a so-called "active" mask, in the form of a spatial light modulator (SLM) operatively connected to a control module, and under the control of the latter, the SLM provides the required pattern **A** or pattern **B.**

Alternatively, the light emitter itself may be configured to generate structured light. This may be implemented by using a matrix of light-emitting elements. Such a matrix may be designed in accordance with a fixed pattern A or **B,** or may be configured as a suitable light emitting modulator, operatively connected to a control module, to selectively illuminate the object with pattern **A** or pattern **B.**

Alternatively, a laser speckle arrangement may be used to provide the random pattern.

In other embodiments, more than two cameras may be used, each of which captures an image of the object illuminated with the random pattern **A,** and each of the images is correlated with the other images in a similar manner to that described above, *mutatis mutandis.*

The spatial relationship between the cameras **C₁, C₂,** the projector **P**, and the object **O** is preferably substantially unchanged from the time the first and second set of images were acquired, and thus, typically, the sets of images **I₁, I₂,** and **K₁, K₂** are taken in very quick succession. Nevertheless, it is possible for some relative movement to occur without affecting accuracy, typically where such movement is less than half the distance between the lines of the striped illumination pattern **B**.

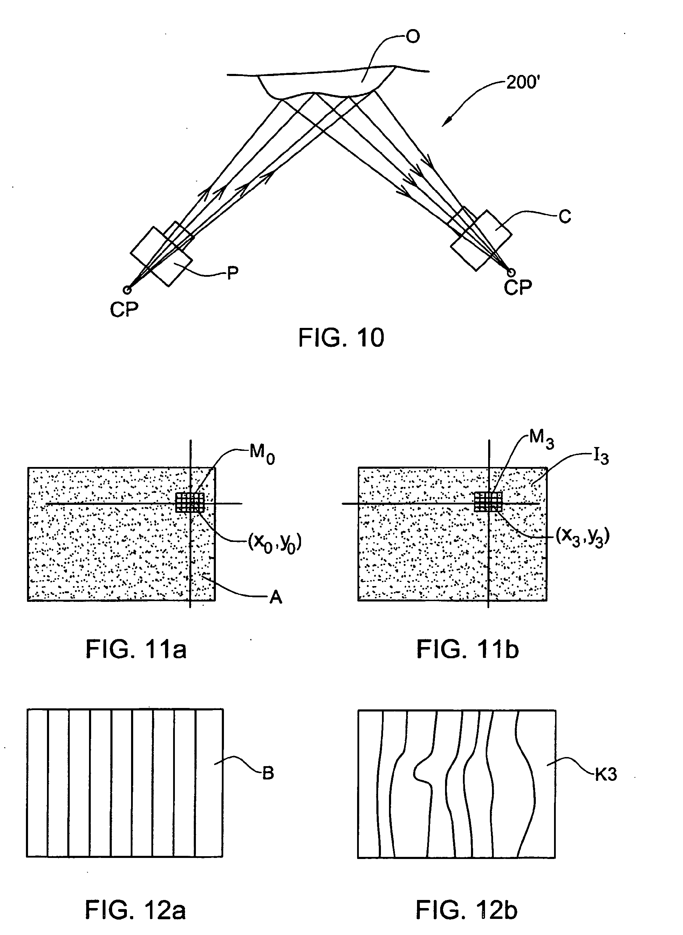

A second embodiment of the invention is illustrated in Fig. 10, and comprises all the elements of the first embodiment, with the following differences, *mutatis mutandis.*

In the second embodiment, the first set of images comprises the uniquely coded structured pattern itself that is used to illuminate the object. Thus, the object **O** is illuminated with a structured illumination, in Stage I, comprising a random or quasi random pixel pattern, such as pattern **A** (Fig.11 a), such that preferably each matrix of [nxm] pixels in the pattern is unique. However, only one image is captured by a camera or the like, providing an image **I₃** of the object **O,** with the pattern superposed on the object, as illustrated in Fig. 11 b, the other "image" of this set being the pattern A itself (Fig. 11a). As with the first embodiment, the pattern **A** will appear distorted when viewed superposed on the object, relative to the original pattern **A.** In this embodiment, rather than finding the correspondence between two images taken by different cameras, the image **I₃** is correlated with the original pattern **A.** In a similar manner to the first embodiment, though, the pattern **A** is divided into all possible [nxm] matrices, which may thus sometimes overlap one with another to some extent, and it is attempted to map each pixel in pattern **A** to a corresponding location in **I₃.** Typically such [nxm] matrices are [5x5] matrices, though the size and aspect ratio of the matrix may vary depending on the size and other characteristics of the image **I₃.**

Thus, in a similar manner to that described for the first embodiment, *mutatis mutandis,* Image **I₃** is effectively decoded to provide correspondence between the coordinates of, say, nodal points in the grid A and the image **I₃.**

In Stage II, a periodic structured illumination such as a striped illumination pattern **B** (Fig. 12a), for example, is projected onto the object **O,** and image **K₃** is taken, as illustrated in Fig 12b. Here, the second set of images comprises the pattern **B**, and an image taken of **B** superimposed over the object **O.** Each part of each of the stripes or lines in the original pattern **B** can be identified as corresponding to a particular line number in the other image **K₃,** and each center point of each said part can be matched to a corresponding part in a line in **K₃** that has been labeled with respect the part of the line in original pattern **B,** to provide the coordinates of the object, in a similar manner to that described for the first embodiment regarding images **K₁** and **K₂,** *mutatis mutandis.*

According to this embodiment, the method of the invention may be carried out using a system **200',** which provides the required illumination for stage I and stage II, using projector **P**, and comprises a camera **C,** aligned at different angle with respect to the object **O** from that of projector **P.** A microprocessor means (not shown) such as a suitable computer processes the images obtained by the camera **C,** typically via an image grabber, together with the patterns **A** and **B,** according to the method of the invention.

The spatial relationship between the camera **C**, the projector **P**, and the object **O** is preferably substantially unchanged from the time the images **I₃** and **K₃** were acquired, and thus, typically, images **I₃** and **K₃** are taken in very quick succession. Nevertheless, it is possible for some relative movement to occur without affecting accuracy, typically where such movement is less than half the distance between the lines of the striped illumination pattern **B.**

In the method claims that follow, alphabetic characters and Roman numerals used to designate claim steps are provided for convenience only and do not imply any particular order of performing the steps.

Finally, it should be noted that the word "comprising" as used throughout the appended claims is to be interpreted to mean "including but not limited to".

## Claims

1. A method for the three-dimensional surface reconstruction of an object **characterised by** the steps of:
(a) obtaining a first set of images of the object having a first structured pattern on the surface thereof, and determining correspondence of image points between images of said first set of images;
(b) obtaining a second set of images of the object having a second structured pattern thereon, and labeling said second structured pattern between images of said second set of images based on the correspondence determined in (a);
(c) matching elements between images of said second set of images based on the labeling determined in (b); and
(d) determining spatial coordinates of the object from matched elements of said images of said second set of images in (b).

2. The method according to claim 1, wherein step (a) comprises the steps of
(A) obtaining said first set of images of said object, wherein said first structured pattern is defined by means of a uniquely coded structured pattern of structured light illuminated on the object; and
(B) finding correspondence between image points of images of said first set of images by mapping coordinates of one image on at least one other image based on coding related to the first structured pattern.

3. The method according to claim 2, wherein said second structured pattern comprises a periodic structured pattern illuminated on the object.

4. The method according to claim 3, wherein said first set of images comprises at least two images at different angles with respect to said object.

5. The method according to claim 4, wherein said at least two images are captured as images.

6. The method according to claim 5, wherein said at least two images are captured substantially simultaneously.

7. The method according to claim 4, wherein one image of said first set of images comprises said uniquely coded structured pattern and at least one other image of said first set of images is captured as an image.

8. The method of claim 4, wherein said uniquely coded structured pattern comprises a two dimensional array having a random or pseudo random distribution of black and white elements.

9. The method according to claim 7, wherein a pattern matching technique is used for finding correspondence of image points in step (a).

10. The method according to claim 3, wherein said second set of images comprises at least two images at different angles with respect to said object.

11. The method according to claim 10, wherein said at least two images are captured as images.

12. The method according to claim 11, wherein said at least two images are captured substantially simultaneously.

13. The method according to claim 10, wherein one image of said second set of images comprises said periodic pattern and at least one other image of said second set of images is captured as an image.

14. The method according to claim 10, wherein said periodic pattern comprises a first plurality of stripes of a first intensity or color intercalated with respect to a second plurality of stripes of a second intensity or color.

15. The method according to claim 14, wherein said first plurality of stripes comprise white pixels and said second plurality of stripes comprise black pixels.

16. The method according to claim 14, wherein:-
(i) a first element in a first image of said second set of images is associated according to a first association technique with a first image point of a first image of said first set of images;
(ii) a second image point of a second image of said first set of images having correspondence with said first image point is determined; and
(iii) said second image point is associated with a second element of a second image of said second set of images according to a second association technique, wherein said second element matches said first element.

17. The method according to claim 16, wherein according to said first association technique, said first element is an image element in substantially the same spatial location as the said first image point relative to their respective images.

18. The method according to claim 16, wherein according to said second association technique, said second element is an image element in a spatial location relative to its image that is at or in close proximity to the location of said second image point relative to its image.

19. The method according to claim 16, wherein said first element comprises the centre point of a row of pixels of a said stripe of said first plurality of stripes comprised in said first image of said second set of images.

20. The method according to claim 16, wherein said second element comprises the centre point of a row of pixels of a said stripe of said first plurality of stripes comprised in said second image of said second set of images.

21. The method according to claim 1, wherein:-
(i) a first element in a first image of said second set of images is associated according to a first association technique with a first image point of a first image of said first set of images;
(ii) a second image point of a second image of said first set of images having correspondence with said first image point is determined; and
(iii) said second image point is associated with a second element of a second image of said second set of images according to a second association technique, wherein said second element matches said first element.

22. The method according to claim 21, wherein according to said first association technique, said first element is an image element in substantially the same spatial location as the said first image point relative to their respective images.

23. The method according to claim 21, wherein according to said second association technique, said second element is an image element in a spatial location relative to its image that is at or in close proximity to the location of said second image point relative to its image.

24. The method according to claim 21, wherein said first element comprises the centre point of a row of pixels of a said stripe of said first plurality of stripes comprised in said first image of said second set of images.

25. The method according to claim 21, wherein said second element comprises the centre point of a row of pixels of a said stripe of said first plurality of stripes comprised in said second image of said second set of images.

26. The method according to claim 1, wherein step (d) is based on triangulation techniques.

27. The method according to claim 1, wherein step (d) is based on epipolar reconstruction techniques.

28. A method for matching points between images of a first set of images of an object **characterised by** the steps of:
**(a)** obtaining said first set of images of the object having a first structured pattern thereon;
**(b)** obtaining a second set of images of the object having a second structured pattern on the surface thereof, and determining correspondence of image points between images of said second set of images;
(c) labeling elements of said first structured pattern between images of said first set of images based on the correspondence determined in (b);
**(d)** matching points comprised in elements between elements labeled in (c).

29. A system for the three-dimensional surface reconstruction of an object comprising:-
(I) a projector adapted for selectively illuminating said object with a first structured pattern and a second structured pattern;
(II) at least one camera for obtaining images of said object when illuminated with said first structured pattern and a second structured pattern;
(III) microprocessor means for determining three-dimensional surface topology of said object based on said images,
according to the method of any one of claims 1 to 27.

30. A computer readable medium storing instructions for programming a microprocessor means of a system as defined in claim 29 to perform a method as defined in any one of claims 1 to 27.

31. A control unit for use in the three-dimensional surface reconstruction of an object, **characterised by** said control unit being preprogrammed to carry out
(i) processing data indicative of a first set of images of the object having a first structured pattern on the surface thereof, and determining correspondence of image points between images of said first set of images;
(ii) using said correspondence for processing a second set of images of the object having a second structured pattern thereon to match elements of said second structured pattern between images of said second set of images;
(iii) analyzing the matched elements to determine spatial coordinates of the obj ect.

## Patentansprüche

1. Verfahren für die dreidimensionale Oberflächenrekonstruktion eines Objekts, **gekennzeichnet durch** die Schritte:
(a) Gewinnen einer ersten Menge von Bildern des Objekts mit einem ersten strukturierten Muster auf dessen Oberfläche, und Bestimmen von Entsprechung von Bildpunkten zwischen Bildern der ersten Menge von Bildern;
(b) Gewinnen einer zweiten Menge von Bildern des Objekts mit einem zweiten strukturierten Muster darauf, und Bezeichnen des zweiten strukturierten Musters zwischen Bildern der zweiten Menge von Bildern basierend auf der in (a) bestimmten Entsprechung;
(c) Zuordnen von Elementen zwischen Bildern der zweiten Menge von Bildern basierend auf der in (b) bestimmten Bezeichnung; und
(d) Bestimmen von räumlichen Koordinaten des Objekts aus zugeordneten Elementen der Bilder der zweiten Menge von Bildern in (b).

2. Verfahren nach Anspruch 1 , wobei Schritt (a) die Schritte umfasst
(A) Gewinnen der ersten Menge von Bildern des Objekts, wobei das erste strukturierte Muster definiert ist mittels eines eindeutig kodierten strukturierten Musters von strukturiertem Licht, das auf das Objekt aufgeleuchtet wird; und
(B) Finden von Entsprechung zwischen Bildpunkten von Bildern der ersten Menge von Bildern durch Abbilden von Koordinaten eines Bildes auf zumindest ein anderes Bild, basierend auf Kodierung, die sich auf das erste strukturierte Muster bezieht.

3. Verfahren nach Anspruch 2, wobei das zweite strukturierte Muster ein periodisches strukturiertes Muster umfasst, das auf das Objekt aufgeleuchtet wird.

4. Verfahren nach Anspruch 3, wobei die erste Menge von Bildern zumindest zwei Bilder in unterschiedlichen Winkeln in Bezug auf das Objekt umfasst.

5. Verfahren nach Anspruch 4, wobei die zumindest zwei Bilder als Bilder erfasst werden.

6. Verfahren nach Anspruch 5, wobei die zumindest zwei Bilder im Wesentlichen gleichzeitig erfasst werden.

7. Verfahren nach Anspruch 4, wobei ein Bild der ersten Menge von Bildern das eindeutig kodierte Muster umfasst, und zumindest ein anderes Bild der ersten Menge von Bildern als Bild erfasst wird.

8. Verfahren nach Anspruch 4, wobei das eindeutig kodierte strukturierte Muster ein zweidimensionales Feld mit einer zufälligen oder pseudozufälligen Verteilung von schwarzen und weißen Elementen umfasst.

9. Verfahren nach Anspruch 7, wobei eine Musterzuordnungstechnik zum Finden von Entsprechung von Bildpunkten in Schritt (a) verwendet wird.

10. Verfahren nach Anspruch 3, wobei die zweite Menge von Bildern zumindest zwei Bilder in unterschiedlichen Winkeln in Bezug auf das Objekt umfasst.

11. Verfahren nach Anspruch 10, wobei die zumindest zwei Bilder als Bilder erfasst werden,

12. Verfahren nach Anspruch 1 1 , wobei die zumindest zwei Bilder im Wesentlichen gleichzeitig erfasst werden,

13. Verfahren nach Anspruch 10, wobei ein Bild der zweiten Menge von Bildern das periodische Muster umfasst, und zumindest ein anderes Bild der zweiten Menge von Bildern als Bild erfasst wird.

14. Verfahren nach Anspruch 10, wobei das periodische Muster eine erste Vielzahl von Streifen einer ersten Intensität oder Farbe umfasst, die eingefügt sind in Bezug auf eine zweite Vielzahl von Streifen einer zweiten Intensität oder Farbe.

15. Verfahren nach Anspruch 14, wobei die erste Vielzahl von Streifen weiße Pixel umfasst, und die zweite Vielzahl von Streifen schwarze Pixel umfasst.

16. Verfahren nach Anspruch 14, wobei:
(i) ein erstes Element in einem ersten Bild der zweiten Menge von Bildern gemäß einer ersten Assoziationstechnik mit einem ersten Bildpunkt eines ersten Bildes der ersten Menge von Bildern assoziiert wird;
(ii) ein zweiter Bildpunkt eines zweiten Bildes der ersten Menge von Bildern, der mit dem ersten Bildpunkt eine Entsprechung aufweist, bestimmt wird; und
(iii) der zweite Bildpunkt mit einem zweiten Element eines zweiten Bildes der zweiten Menge von Bildern gemäß einer zweiten Assoziationstechnik assoziiert wird, wobei das zweite Element dem ersten Element zugeordnet ist.

17. Verfahren nach Anspruch 16, wobei gemäß der ersten Assoziationstechnik das erste Element ein Bildelement in der im Wesentlichen selben räumlichen Lage ist, wie der erste Bildpunkt, relativ zu deren jeweiligen Bildern.

18. Verfahren nach Anspruch 16, wobei gemäß der zweiten Assoziationstechnik das zweite Element ein Bildelement ist, das relativ zu seinem Bild in einer räumlichen Lage ist, die an oder in großer Nähe der Lage des zweiten Bildpunktes relativ zu seinem Bild ist.

19. Verfahren nach Anspruch 16, wobei das erste Element den Mittelpunkt einer Reihe von Pixels eines der Streifen der ersten Vielzahl von Streifen umfasst, die in dem ersten Bild der zweiten Menge von Bildern umfasst ist.

20. Verfahren nach Anspruch 16, wobei das zweite Element den Mittelpunkt einer Reihe von Pixels eines der Streifen der ersten Vielzahl von Streifen umfasst, die in dem zweiten Bild der zweiten Menge von Bildern umfasst ist.

21. Verfahren nach Anspruch 1 , wobei;
(i) ein erstes Element in einem ersten Bild der zweiten Menge von Bildern gemäß einer ersten Assoziationstechnik mit einem ersten Bildpunkt eines ersten Bildes der ersten Menge von Bildern assoziiert wird;
(ii) ein zweiter Bildpunkt eines zweiten Bildes der ersten Menge von Bildern, der mit dem ersten Bildpunkt eine Entsprechung aufweist, bestimmt wird; und
(iii) der zweite Bildpunkt mit einem zweiten Element eines zweiten Bildes der zweiten Menge von Bildern gemäß einer zweiten Assoziationstechnik assoziiert wird, wobei das zweite Element dem ersten Element zugeordnet ist.

22. Verfahren nach Anspruch 21, wobei gemäß der ersten Assoziationstechnik das erste Element ein Bildelement in der im Wesentlichen selben räumlichen Lage ist, wie der erste Bildpunkt, relativ zu deren jeweiligen Bildern.

23. Verfahren nach Anspruch 21, wobei gemäß der zweiten Assoziationstechnik das zweite Element ein Bildelement ist, das relativ zu seinem Bild in einer räumlichen Lage ist, die an oder in großer Nähe der Lage des zweiten Bildpunktes relativ zu seinem Bild ist.

24. Verfahren nach Anspruch 21, wobei das erste Element den Mittelpunkt einer Reihe von Pixels eines der Streifen der ersten Vielzahl von Streifen umfasst, die in dem ersten Bild der zweiten Menge von Bildern umfasst ist.

25. Verfahren nach Anspruch 21, wobei das zweite Element den Mittelpunkt einer Reihe von Pixels eines der Streifen der ersten Vielzahl von Streifen umfasst, die in dem zweiten Bild der zweiten Menge von Bildern umfasst ist.

26. Verfahren nach Anspruch 1 , wobei Schritt (d) auf Triangulationstechniken basiert,

27. Verfahren nach Anspruch 1 , wobei Schritt (d) auf epipolaren Rekonstruktionstechniken basiert.

28. Verfahren zum Zuordnen von Punkten zwischen Bildern einer ersten Menge von Bilder eines Objektes, **gekennzeichnet durch** die Schritte:
(a) Gewinnen der ersten Menge von Bildern des Objekts mit einem ersten strukturierten Muster darauf,
(b) Gewinnen einer zweiten Menge von Bildern des Objekts mit einem zweiten strukturierten Muster auf dessen Oberfläche, und Bestimmen von Entsprechung von Bildpunkten zwischen Bildern der zweiten Menge von Bildern;
(c) Bezeichnen von Elementen des ersten strukturierten Musters zwischen Bildern der ersten Menge von Bildern basierend auf der in (b) bestimmten Entsprechung;
(d) Zuordnen von Punkten, die in Elementen umfasst sind, zwischen in (c) bezeichneten Elementen.

29. System für die dreidimensionale Oberflächenrekonstruktion eines Objekts, umfassend:
(I) einen Projektor, der angepasst ist, selektiv das Objekt mit einem ersten strukturierten Muster und einem zweiten strukturierten Muster anzuleuchten;
(II) zumindest eine Kamera zum Gewinnen von Bildern des Objekts, wenn es mit dem ersten strukturierten Muster und einem zweiten strukturierten Muster angeleuchtet ist;
(III) Mikroprozessormittel zum Bestimmen der dreidimensionalen Oberflächentopologie des Objekts, basierend auf den Bildern, gemäß dem Verfahren nach irgendeinem der Ansprüche 1 bis 27.

30. Computerlesbares Medium, das Befehle zum Programmieren eines Mikroprozessormittels eines Systems, wie es in Anspruch 29 definiert ist, speichert, um ein Verfahren auszuführen, wie es in irgendeinem der Ansprüche 1 bis 27 definiert ist.

31. Steuereinheit zur Verwendung in der dreidimensionalen Oberflächenrekonstruktion eines Objekts, **dadurch gekennzeichnet, dass** die Steuereinheit programmiert ist, auszuführen
(i) Verarbeiten von Daten, die bezeichnend sind für eine ersten Menge von Bildern des Objekts mit einem ersten strukturierten Muster auf dessen Oberfläche, und Bestimmen von Entsprechung von Bildpunkten zwischen Bildern der ersten Menge von Bildern;
(ii) Verwenden der Entsprechung zur Verarbeitung einer zweiten Menge von Bildern des Objekts mit einem zweiten strukturierten Muster darauf, um Elemente des zweiten strukturierten Musters zwischen Bildern der zweiten Menge von Bildern zuzuordnen;
(iii) Analysieren der zugeordneten Elemente um räumliche Koordinaten des Objekts zu bestimmen.

## Revendications

1. Procédé pour la reconstruction de la surface tridimensionnelle d'un objet **caractérisé par** les étapes de :
(a) obtenir un premier ensemble d'images de l'objet ayant un premier motif structuré sur la surface de celui-ci, et déterminer une correspondance de points d'images entre images dudit premier ensemble d'images ;
(b) obtenir un deuxième ensemble d'images de l'objet ayant un deuxième motif structuré sur celui-ci, et marquer ledit deuxième motif structuré entre images dudit deuxième ensemble d'images sur la base de la correspondance déterminée en (a) ;
(c) faire correspondre des éléments entre images dudit deuxième ensemble d'images sur la base du marquage déterminé en (b) ; et
(d) déterminer les coordonnées spatiales de l'objet à partir des éléments mis en correspondance desdites images dudit deuxième ensemble d'images en (b).

2. Procédé selon la revendication 1, dans lequel l'étape (a) comprend les étapes de
(A) obtenir ledit premier ensemble d'images dudit objet, où ledit premier motif structuré est défini au moyen d'un motif structuré à codage unique de lumière structurée projetée sur l'objet ; et .
(B) trouver une correspondance entre des points d'images d'images dudit premier ensemble d'images en cartographiant les coordonnées d'une image sur au moins une autre image sur la base du codage relatif au premier motif structuré.

3. Procédé selon la revendication 2, dans lequel ledit deuxième motif structuré comprend un motif structuré périodique projeté sur l'objet.

4. Procédé selon la revendication 3, dans lequel ledit premier ensemble d'images comprend au moins deux images sous des angles différents par rapport audit objet.

5. Procédé selon la revendication 4, dans lequel lesdites au moins deux images sont capturées en tant qu'images.

6. Procédé selon la revendication 5, dans lequel lesdites au moins deux images sont capturées substantiellement simultanément.

7. Procédé selon la revendication 4, dans lequel une image dudit premier ensemble d'images comprend ledit motif structuré à codage unique et au moins une autre image dudit premier ensemble d'images est capturée en tant qu'image.

8. Procédé selon la revendication 4, dans lequel ledit motif structuré à codage unique comprend un réseau bidimensionnel ayant une distribution aléatoire ou pseudo aléatoire d'éléments noirs et blancs.

9. Procédé selon la revendication 7, dans lequel une technique de mise en correspondance de motifs est utilisée pour trouver une correspondance de points d'images à l'étape (a).

10. Procédé selon la revendication 3, dans lequel ledit deuxième ensemble d'images comprend au moins deux images sous des angles différents par rapport audit objet.

11. Procédé selon la revendication 10, dans lequel lesdites au moins deux images sont capturées en tant qu'images.

12. Procédé selon la revendication 11, dans lequel lesdites au moins deux images sont capturées substantiellement simultanément.

13. Procédé selon la revendication 10, dans lequel une image dudit deuxième ensemble d'images comprend ledit motif périodique et au moins une autre image dudit deuxième ensemble d'images est capturée en tant qu'image.

14. Procédé selon la revendication 10, dans lequel ledit motif périodique comprend une première pluralité de bandes d'une première intensité ou couleur intercalées par rapport à une deuxième pluralité de bandes d'une deuxième intensité ou couleur.

15. Procédé selon la revendication 14, dans lequel ladite première pluralité de bandes comprend des pixels blancs et ladite deuxième pluralité de bandes comprend des pixels noirs.

16. Procédé selon la revendication 14, dans lequel :
(i) un premier élément dans une première image dudit deuxième ensemble d'images est associé selon une première technique d'association avec un premier point d'image d'une première image dudit premier ensemble d'images ;
(ii) un deuxième point d'image d'une deuxième image dudit premier ensemble d'images ayant une correspondance avec ledit premier point d'image est déterminé ; et
(iii) ledit deuxième point d'image est associé avec un deuxième élément d'une deuxième image dudit deuxième ensemble d'images selon une deuxième technique d'association, dans lequel ledit deuxième élément correspond audit premier élément.

17. Procédé selon la revendication 16, dans lequel selon ladite première technique d'association, ledit premier élément est un élément d'image dans substantiellement le même emplacement spatial que ledit premier point d'image par rapport à leurs images respectives.

18. Procédé selon la revendication 16, dans lequel selon ladite deuxième technique d'association, ledit deuxième élément est un élément d'image dans un emplacement spatial par rapport à son image qui est au niveau ou en étroite proximité de l'emplacement dudit deuxième point d'image par rapport à son image.

19. Procédé selon la revendication 16, dans lequel ledit premier élément comprend le point central d'une rangée de pixels d'une dite bande de ladite première pluralité de bandes comprise dans ladite première image dudit deuxième ensemble d'images.

20. Procédé selon la revendication 16, dans lequel ledit deuxième élément comprend le point central d'une rangée de pixels d'une dite bande de ladite première pluralité de bandes comprise dans ladite deuxième image dudit deuxième ensemble d'images.

21. Procédé selon la revendication 1, dans lequel :
(i) un premier élément dans une première image dudit deuxième ensemble d'images est associé selon une première technique d'association avec un premier point d'image d'une première image dudit premier ensemble d'images ;
(ii) un deuxième point d'image d'une deuxième image dudit premier ensemble d'images ayant une correspondance avec ledit premier point d'image est déterminé ; et
(iii) ledit deuxième point d'image est associé avec un deuxième élément d'une deuxième image dudit deuxième ensemble d'images selon une deuxième technique d'association, dans lequel ledit deuxième élément correspond audit premier élément.

22. Procédé selon la revendication 21, dans lequel selon ladite première technique d'association, ledit premier élément est un élément d'image dans substantiellement le même emplacement spatial que ledit premier point d'image par rapport à leurs images respectives.

23. Procédé selon la revendication 21, dans lequel selon ladite deuxième technique d'association, ledit deuxième élément est un élément d'image dans un emplacement spatial par rapport à son image qui est au niveau ou en étroite proximité de l'emplacement dudit deuxième point d'image par rapport à son image.

24. Procédé selon la revendication 21, dans lequel ledit premier élément comprend le point central d'une rangée de pixels d'une dite bande de ladite première pluralité de bandes comprise dans ladite première image dudit deuxième ensemble d'images.

25. Procédé selon la revendication 21, dans lequel ledit deuxième élément comprend le point central d'une rangée de pixels d'une dite bande de ladite première pluralité de bandes comprise dans ladite deuxième image dudit deuxième ensemble d'images.

26. Procédé selon la revendication 1, dans lequel l'étape (d) est basée sur des techniques de triangulation.

27. Procédé selon la revendication 1, dans lequel l'étape (d) est basée sur des techniques de reconstruction épipolaire.

28. Procédé pour mettre en correspondance des points entre images d'un premier ensemble d'images d'un objet **caractérisé par** les étapes de :
(a) obtenir ledit premier ensemble d'images de l'objet ayant un premier motif structuré sur celui-ci ;
(b) obtenir un deuxième ensemble d'images de l'objet ayant un deuxième motif structuré sur la surface de celui-ci, et déterminer une correspondance de points d'images entre images dudit deuxième ensemble d'images ;
(c) marquer des éléments dudit premier motif structuré entre images dudit premier ensemble d'images sur la base de la correspondance déterminée en (b) ;
(d) mettre en correspondance des points compris dans des éléments entre des éléments marqués en (c).

29. Système pour la reconstruction de la surface tridimensionnelle d'un objet comprenant :
(I) un projecteur adapté pour projeter sélectivement sur ledit objet un premier motif structuré et un deuxième motif structuré ;
(II) au moins une caméra pour obtenir des images dudit objet lorsque ledit premier motif structuré et un deuxième motif structuré sont projetés ;
(III) un moyen de microprocesseur pour déterminer la topologie de surface tridimensionnelle dudit objet sur la base desdites images, conformément au procédé selon l'une quelconque des revendications 1 à 27.

30. Instructions de stockage sur support lisible par ordinateur pour programmer un moyen de microprocesseur d'un système selon la revendication 29 pour mettre en oeuvre un procédé selon l'une quelconque des revendications 1 à 27.

31. Unité de commande destinée à une utilisation dans la reconstruction de la surface tridimensionnelle d'un objet, **caractérisé par** ladite unité de commande étant préprogrammée pour mettre en oeuvre
(i) un traitement de données indicatrices d'un premier ensemble d'images de l'objet ayant un premier motif structuré sur la surface de celui-ci, et une détermination de points d'images entre images dudit premier ensemble d'images ;
(ii) l'utilisation de ladite correspondance pour traiter un deuxième ensemble d'images de l'objet ayant un deuxième motif structuré sur celui-ci pour mettre en correspondance des éléments dudit deuxième motif structuré entre images dudit deuxième ensemble d'images ;
(iii) analyser les éléments mis en correspondance pour déterminer les coordonnées spatiales de l'objet.
